# EUROPEAN PATENT APPLICATION

(11) **EP 4 847 370 A1**
(43) Date of publication of application: **02.12.2026**
(21) Application number: 25178685.1
(22) Date of filing: 26.05.2025
(51) Int. Cl.: B63H 5/10, B63H 23/22, H02K 49/10

(54) **MARINE PROPULSION SYSTEM**

(71) Applicant: Volvo Penta Corporation, 405 08 Göteborg (SE)
(72) Inventor: MATTSSON, Per, SÖLVESBORG (SE); WESSMAN, Björn, TORSLANDA (SE); RYDSTRÖM, Mats, BILLDAL (SE)
(74) Representative: Ström & Gulliksson AB

(57) **Abstract**

The present disclosure relates to a marine propulsion system for a marine vessel, comprising a power source having an output shaft, a forward propeller having a first shaft, and an aft propeller having a second shaft, the propellers being driven by the power source, the forward propeller and the aft propeller being counter-rotating, where a floating field-modulated magnetic gear set is arranged between the output shaft and the first and second shafts, where the field-modulated magnetic gear set comprises an inner rotor, an outer rotor and a third rotor arranged between the inner and outer rotors, wherein the output shaft is connected to one of the rotors and the first shaft and the second shaft are connected to the other rotors.

## Description

### TECHNICAL FIELD

The disclosure relates generally to propulsion of marine vessels. In particular aspects, the disclosure relates to a marine propulsion system. The disclosure can be applied to marine vessels, such as sailboats, watercrafts, motorboats, work boats, sport vessels, boats, ships, among other vessel types. Although the disclosure may be described with respect to a particular marine vessel, the disclosure is not restricted to any particular marine vessel.

### BACKGROUND

The design of efficient and reliable marine propulsion systems presents significant challenges, particularly in balancing the performance characteristics of power sources and propellers. Electric motors are increasingly favored as power sources due to their potential for high efficiency, reduced emissions, and improved control. However, achieving optimal performance from an electric motor in a marine environment requires careful consideration of its operational speed.

High-performance electric motors often exhibit peak efficiency at elevated rotational speeds (RPM). Direct coupling of such motors to propellers is generally impractical, as propellers typically operate most effectively at significantly lower RPMs. This necessitates the use of a speed reduction mechanism to match the motor's output to the propeller's requirements.

Traditional mechanical gearing systems, such as planetary gears, have been widely employed for this purpose. While effective in reducing speed, these systems suffer from inherent drawbacks. Mechanical gears introduce friction, leading to energy losses and reduced overall system efficiency. Furthermore, the physical contact between gear teeth results in wear, requiring regular lubrication and maintenance, and limiting the lifespan of the propulsion system.

Another significant issue with mechanical gearing is noise generation. The meshing of gear teeth creates acoustic noise that can be undesirable in marine environments, affecting passenger comfort and potentially impacting marine life. Moreover, conventional mechanical gearboxes often impose geometric constraints that limit the achievable speed ratios, hindering the ability to fully optimize both motor and propeller performance.

Therefore, there exists a need for an improved speed reduction mechanism in marine propulsion systems that can effectively translate the high-RPM output of modern electric motors to the optimal speed range for propellers, while minimizing energy losses, reducing maintenance requirements, and mitigating noise generation.

### SUMMARY

According to a first aspect of the disclosure, a marine propulsion system for a marine vessel, comprising a power source having an output shaft, a forward propeller having a first shaft, and an aft propeller having a second shaft, the propellers being driven by the power source, the forward propeller and the aft propeller being counter-rotating, where a floating field-modulated magnetic gear set is arranged between the output shaft and the first and second shafts, where the field-modulated magnetic gear set comprises an inner rotor, an outer rotor and a third rotor arranged between the inner and outer rotors, wherein the output shaft is connected to one of the rotors and the first shaft and the second shaft are connected to the other rotors.

The first aspect of the disclosure may seek to solve a problem, namely, the need for efficient speed reduction between a high-speed power source and contra-rotating propellers in a marine vessel, while also reducing mechanical wear, maintenance, and noise associated with traditional gearing systems. It also addresses the geometric limitations of conventional gearboxes, enabling higher and more flexible speed ratios.

A technical benefit may include enhanced efficiency and higher speed ratios without geometric limitations, reduced maintenance and improved reliability due to the elimination of mechanical contact and consequent wear, and enhanced performance of contra-rotating propellers in marine propulsion applications.

Optionally in some examples, including in at least one preferred example, the inner rotor is equipped with first permanent magnets, the outer rotor is equipped with second permanent magnets, and the third rotor is equipped with pole pieces. A technical benefit may include providing a reliable and efficient means of transmitting torque through magnetic interaction, eliminating direct mechanical contact and reducing wear.

Optionally in some examples, including in at least one preferred example, the inner rotor is equipped with 2P1 permanent magnets, the outer rotor is equipped with 2P2 permanent magnets, and the third rotor is equipped with P3 pole pieces. A technical benefit may include defining a precise magnetic pole arrangement for optimized gear ratio and torque transmission characteristics.

Optionally in some examples, including in at least one preferred example, the third rotor is configured to modulate the magnetic fields between the inner and outer rotors. A technical benefit may include enabling efficient torque transfer between the rotors without direct mechanical contact, reducing wear and maintenance.

Optionally in some examples, including in at least one preferred example, an intrinsic gear ratio Gr is defined by Gr=P3/P1, wherein P3=P1+P2. A technical benefit may include establishing a clear relationship between the number of poles and pole pieces for predictable and efficient gear operation.

Optionally in some examples, including in at least one preferred example, the intrinsic gear ratio Gr is dynamically adjustable. A technical benefit may include allowing the propulsion system to adapt to varying load conditions, optimizing efficiency across a range of operating speeds.

Optionally in some examples, including in at least one preferred example, the marine propulsion system comprising a control unit. A technical benefit may include enabling automated adjustment of the propulsion system based on sensor feedback, optimizing performance and efficiency.

Optionally in some examples, including in at least one preferred example, the control unit is configured to adjust the position of the third rotor to vary the gear ratio. A technical benefit may include providing a means for actively controlling the gear ratio, allowing for precise adjustments to propeller speed and thrust.

Optionally in some examples, including in at least one preferred example, the gear ratio is at least 10:1. A technical benefit may include providing a significant speed reduction from the power source to the propellers, optimizing propeller efficiency.

Optionally in some examples, including in at least one preferred example, the output shaft is connected with the inner rotor, the first shaft is connected with the outer rotor and the second shaft is connected with the third rotor. A technical benefit may include a specific rotor arrangement that optimizes torque transmission and system balance.

Optionally in some examples, including in at least one preferred example, the output shaft is connected with the third rotor, the first shaft is connected with the outer rotor and the second shaft is connected with the inner rotor. A technical benefit may include an alternative rotor arrangement that provides different torque and speed characteristics.

Optionally in some examples, including in at least one preferred example, the output shaft is connected with the outer rotor, the first shaft is connected with the third rotor and the second shaft is connected with the inner rotor. A technical benefit may include a further alternative rotor arrangement that offers a different set of performance trade-offs.

Optionally in some examples, including in at least one preferred example, the power source is an electric motor. A technical benefit may include enabling clean and efficient propulsion with reduced emissions.

Optionally in some examples, including in at least one preferred example, the electric motor is optimized for high-RPM operation, exceeding 5000 RPM. A technical benefit may include maximizing the efficiency and power output of the electric motor.

Optionally in some examples, including in at least one preferred example, the floating field-modulated magnetic gear set is configured to minimize losses associated with high-RPM input thereby preserving the electric motor's efficiency gains. A technical benefit may include maintaining high overall system efficiency by reducing energy dissipation in the magnetic gear set.

Optionally in some examples, including in at least one preferred example, the floating field-modulated magnetic gear set is a radial floating field-modulated magnetic gear set. A technical benefit may include a compact and efficient design for marine propulsion systems.

Optionally in some examples, including in at least one preferred example, the floating field-modulated magnetic gear set is designed to maintain consistent magnetic coupling despite minor misalignments between the power source and propeller shafts. A technical benefit may include improving system reliability and reducing the impact of installation imperfections.

Optionally in some examples, including in at least one preferred example, the control unit is configured to dynamically adjust the gear ratio of the floating field-modulated magnetic gear set based on real-time operating conditions. A technical benefit may include enabling the propulsion system to adapt to changing environmental conditions and operational demands, optimizing efficiency and performance.

According to a second aspect of the disclosure, a marine vessel comprising a marine propulsion system as disclosed herein. The second aspect of the disclosure may seek to solve a problem, namely, the integration of an efficient and reliable propulsion system within a marine vessel, optimizing space utilization while minimizing noise and maintenance requirements. This addresses the need for compact, high-performance propulsion solutions that can enhance vessel maneuverability and reduce operational costs. A technical benefit may include improved vessel performance through optimized propulsion efficiency, reduced lifecycle costs due to lower maintenance needs, and enhanced passenger comfort resulting from quieter operation.

According to a third aspect of the disclosure, a method for propelling a marine vessel, comprising: generating rotational power from a power source via an output shaft; driving a forward propeller and an aft propeller using the rotational power; interposing a floating field-modulated magnetic gear set between the output shaft of the power source and a first shaft of the forward propeller and a second shaft of the aft propeller; transmitting rotational power through the field-modulated magnetic gear set comprising an inner rotor, an outer rotor, and a third rotor arranged between the inner and outer rotors; connecting the output shaft to one of the rotors of the field-modulated magnetic gear set; and connecting the first shaft and the second shaft to the other rotors of the field-modulated magnetic gear set to drive the forward propeller and the aft propeller, respectively.

The third aspect of the disclosure may seek to solve a problem, namely, providing a method for efficient and controllable marine propulsion that minimizes energy losses and mechanical wear. This addresses the challenges of achieving precise speed and torque control in marine environments while ensuring long-term reliability and reduced environmental impact. A technical benefit may include enhanced propulsion efficiency through optimized power transmission, extended operational lifespan due to minimized mechanical wear, and reduced energy consumption resulting in lower emissions and operational costs.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary marine propulsion system according to an example.
**FIG. 2** is an exemplary marine propulsion system according to another example.
**FIG. 3** is an exemplary marine propulsion system according to yet another example.
**FIG. 4** is an exemplary floating field-modulated magnetic gear set according to an example.
**FIG. 5** shows a part of a marine vessel with a marine propulsion system.

### DETAILED DESCRIPTION

The detailed description set forth below provides information and examples of the disclosed technology with sufficient detail to enable those skilled in the art to practice the disclosure.

Existing solutions, predominantly mechanical gearboxes, introduce a cascade of inefficiencies and operational limitations that this technology directly addresses. Mechanical gearboxes, while traditionally reliable, are inherently limited by their reliance on physical contact between gear teeth. This contact generates friction, leading to energy losses manifested as heat, diminishing the overall system efficiency. The constant meshing also causes wear and tear, necessitating frequent lubrication and maintenance, thereby increasing operational costs and downtime. Moreover, the intricate mechanical assembly produces significant acoustic noise, which is not only undesirable for passenger comfort but also poses a potential disturbance to marine ecosystems.

In contrast, the disclosed technology leverages a floating field-modulated magnetic gear set to achieve speed reduction and torque amplification without physical contact. This gear set comprises three key components: an inner rotor, an outer rotor, and a third, modulating rotor positioned therebetween. Each rotor is designed with specific magnetic properties and arrangements to facilitate efficient and controlled torque transfer.

In the context of the present disclosure, the term "floating" as applied to the field-modulated magnetic gear set signifies a specific operational characteristic wherein the rotational speeds of the forward and aft propellers are not directly or actively controlled by the system's control mechanisms. Instead, the speeds of the propellers are primarily determined by the hydrodynamic resistance encountered by each propeller as it interacts with the surrounding water. This resistance is influenced by factors such as the vessel's speed, water density, propeller pitch, and any disturbances in the water flow.

The floating field-modulated magnetic gear set acts as a passive torque splitter and speed adapter, efficiently transmitting power from the power source to the propellers while allowing each propeller to independently seek its equilibrium speed based on its experienced resistance. This is achieved through the inherent properties of the magnetic gear set, which allows for a degree of slip or differential speed between the rotors connected to the propellers.

Unlike traditional gear systems with fixed gear ratios, the floating magnetic gear does not rigidly enforce a specific speed relationship between the propellers. Instead, it magnetically couples the propellers to the power source, allowing for a self-adjusting speed differential. This is particularly advantageous in marine applications where propellers may experience varying loads due to asymmetrical water flow, turning maneuvers, or changes in vessel trim.

The floating characteristic is achieved through a combination of design parameters, including the magnetic material properties, air gap dimensions, and the number of magnetic poles and pole pieces on each rotor. These parameters are carefully selected to provide a balance between efficient torque transmission and the desired degree of speed freedom for the propellers. This allows for the propellers to "float" within a certain speed range, self-optimizing their performance based on the external hydrodynamic conditions.

This "floating" functionality is analogous to the behavior of the previously employed "floating" planetary gear set, where the propellers were also allowed to self-adjust their speeds based on hydrodynamic resistance. The floating magnetic gear set, however, offers the additional benefits of reduced friction, wear, and noise compared to its mechanical counterpart, while still maintaining the desired operational characteristic of passively adapting to varying propeller loads.

The functionality of this floating magnetic gear set stems from the precise modulation of magnetic fields. Permanent magnets strategically embedded within the inner and outer rotors generate powerful magnetic fields. The third, modulating rotor, equipped with specialized pole pieces, acts as a magnetic "translator," shaping and directing these fields to achieve the desired speed reduction ratio. By carefully selecting the number of magnetic poles and pole pieces on each rotor, the gear ratio can be precisely tailored to match the high-efficiency operating range of the electric motor to the optimal speed for the propellers.

The advantages of this contact-free approach are multifaceted and substantial. First, the elimination of mechanical contact drastically reduces friction, leading to significant improvements in energy efficiency. This translates to lower energy consumption, extended battery life (in electric marine vessels), and reduced greenhouse gas emissions. Second, the absence of physical wear eliminates the need for frequent lubrication and maintenance, reducing operational costs and minimizing environmental concerns associated with lubricant leakage. Third, the floating magnetic gear set operates with significantly less noise than mechanical gearboxes, enhancing passenger comfort and reducing the impact on marine life.

In essence, the disclosed technology offering a more efficient, reliable, and environmentally conscious alternative to traditional mechanical gearboxes.

In addition, an advantage of the floating field-modulated magnetic gear set is its ability to accommodate a scenario where one of the propellers is completely immobilized, such as when it becomes entangled in a net or other obstruction. In such an event, the "floating" design characteristic allows the other propeller to continue rotating and providing thrust, albeit at a potentially reduced efficiency.

This ability to function with one propeller stationary is a significant safety and operational advantage. It allows the vessel to maintain some degree of maneuverability and propulsion in emergency situations, providing time to address the obstruction without completely losing control. The magnetic gear set acts as an inherent overload protection mechanism, preventing catastrophic failure and ensuring the continued operation of at least one propeller. Importantly, the system is designed to handle this condition without requiring immediate intervention or adjustments to the power source. The magnetic gear set passively adapts to the changed load conditions, allowing the remaining propeller to continue providing thrust while minimizing stress on the system components. This robustness and fault tolerance are critical for ensuring the reliability and safety of marine vessels operating in challenging environments.

The article "A review on the field-modulated magnetic gears: Development status, potential applications, and existent challenges" by Yan, Li, Wang and Yang published in IET Electric Power Applications 2024;18:1-19, describes the functionality of field-modulated magnetic gears, and the article is incorporated by reference.

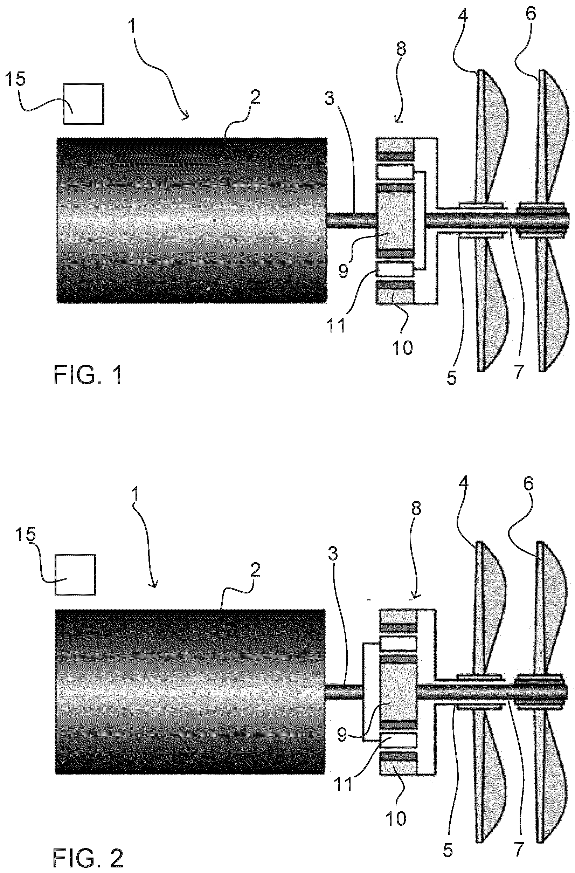

FIG. 1 is an exemplary a marine propulsion system 1 for a marine vessel according to an example. The marine propulsion system 1 comprises a power source 2 having an output shaft 3. The power source 2 may be an electric motor 2.

The electric motor 2 may be a permanent magnet synchronous motor. A technical benefit may include providing high efficiency and power density for the propulsion system. In addition, the electric motor 2 may be optimized for high-RPM operation, exceeding 5000 RPM. A technical benefit may include maximizing the efficiency and power output of the electric motor 2.

The marine propulsion system 1 also comprises a forward propeller 4 having a first shaft 5, and an aft propeller 6 having a second shaft 7, the propellers 4, 6 being driven by the power source 2. The forward propeller 4 and the aft propeller 6 being counter-rotating. A technical benefit may include improving propulsion efficiency and reducing energy losses. Furthermore, the counter-rotation may be controlled to optimize thrust at varying vessel speeds. A technical benefit may include maximizing propulsion efficiency and maneuverability across a range of operating conditions. The marine propulsion system 1 further comprises a floating field-modulated magnetic gear set 8, the floating field-modulated magnetic gear set 8 is arranged between the output shaft 3 and the first and second shafts 5, 7. The field-modulated magnetic gear set 8 comprises an inner rotor 9, an outer rotor 10 and a third rotor 11 arranged between the inner and outer rotors 9,10. According to the disclosure, the output shaft 3 is connected to one of the rotors 9, 10, 11 and the first shaft 5 and the second shaft 7 are connected to the other rotors 9, 10, 11.

In the example of **FIG. 1****,** the output shaft 3 is connected with the inner rotor 9, the first shaft 5 is connected with the outer rotor 10 and the second shaft 7 is connected with the third rotor 11.

In the example of **FIG. 2****,** the output shaft 3 is connected with the third rotor 11, the first shaft 5 is connected with the outer rotor 10 and the second shaft 7 is connected with the inner rotor 9.

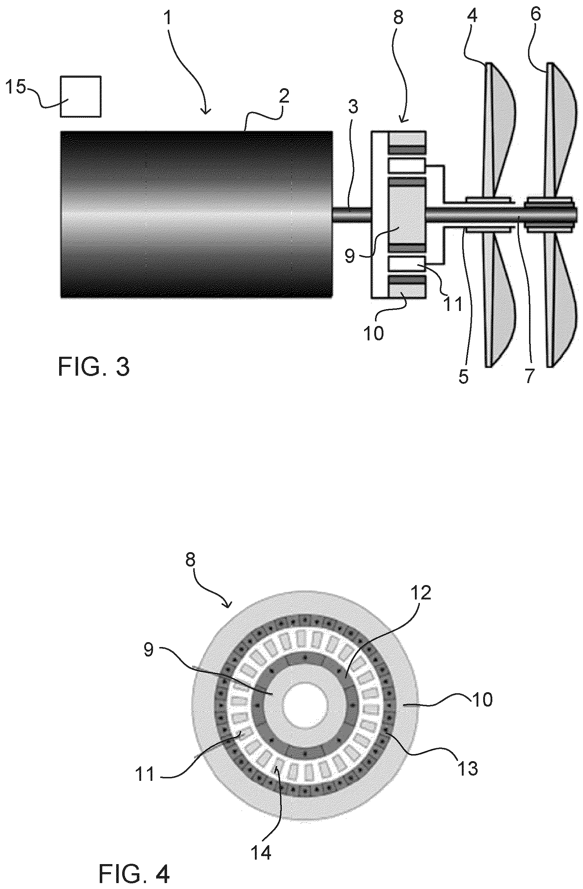

In the Example of **FIG. 3****,** the output shaft 3 is connected with the outer rotor 10, the first shaft 5 is connected with the third rotor 11 and the second shaft 7 is connected with the inner rotor 9.

As indicated in **FIGS. 1-3****,** the field-modulated magnetic gear set 8 may be connected in different ways to the output shaft 3 and the first shaft 5 and the second shaft 7, respectively. This have the advantage that the field-modulated magnetic gear set 8 may be designed for different torque and speed characteristics as well as for different set of performance trade-offs.

Furthermore, as shown in **FIG. 4****,** the inner rotor 9 is equipped with first permanent magnets 12, the outer rotor 10 is equipped with second permanent magnets 13, and the third rotor 11 is equipped with pole pieces 14. A technical benefit may include providing a reliable and efficient means of transmitting torque through magnetic interaction, eliminating direct mechanical contact and reducing wear. In an example, the first permanent magnets 13 and the second permanent magnets 14 are rare-earth magnets. A technical benefit may include maximizing magnetic flux density, resulting in higher torque transmission capability and improved overall gear set performance.

In an example, the inner rotor 9 is equipped with 2P1 permanent magnets 12, the outer rotor 10 is equipped with 2P2 permanent magnets 13, and the third rotor 11 is equipped with P3 pole pieces 14. A technical benefit may include defining a precise magnetic pole arrangement for optimized gear ratio and torque transmission characteristics. Moreover, 2P1 permanent magnets and 2P2 permanent magnets are selected to optimize torque density for a specific operational speed of the propellers 4, 6. A technical benefit may include tailoring the magnetic gear set to deliver maximum torque at a desired propeller speed, enhancing propulsion efficiency.

In an example, P3 pole pieces may be selected to minimize torque ripple. A technical benefit may include ensuring smoother power delivery to the propellers, reducing vibration and noise in the propulsion system. Also, the pole pieces 14 on the third rotor 11 may be skewed to reduce cogging torque. A technical benefit may include minimizing torque ripple and vibration, resulting in smoother and quieter operation.

Moreover, the third rotor 11 may comprise a high-temperature superconductor material to enhance magnetic field modulation. A technical benefit may include increasing the magnetic flux density and improving torque transmission capability.

Furthermore, the floating field-modulated magnetic gear set 8 may comprise an adjustable mechanism to alter the number of active pole pieces 14 thereby modifying the gear ratio. A technical benefit may include enabling dynamic adjustment of the gear ratio to optimize propeller speed and thrust for various operating conditions. Also, a gear ratio may be continuously variable to allow for seamless adjustment of propeller speed independent of power source RPM. A technical benefit may include providing enhanced control over propeller speed, allowing for efficient maneuvering and optimal propulsion at all marine vessel speeds.

In addition, the third rotor 11 is configured to modulate the magnetic fields between the inner and outer rotors 9, 10. A technical benefit may include enabling efficient torque transfer between the rotors without direct mechanical contact, reducing wear and maintenance.

In an example, an intrinsic gear ratio Gr of the floating field-modulated magnetic gear set 8 is defined by Gr=P3/P1, wherein P3=P1+P2. A technical benefit may include establishing a clear relationship between the number of poles and pole pieces for predictable and efficient gear operation. The intrinsic gear ratio Gr may be dynamically adjustable. A technical benefit may include allowing the propulsion system to adapt to varying load conditions, optimizing efficiency across a range of operating speeds.

The marine propulsion system 1 may also comprise a control unit 15. A technical benefit may include enabling automated adjustment of the propulsion system based on sensor feedback, optimizing performance and efficiency. The control unit 15 may configured to adjust the position of the third rotor 11 to vary the gear ratio. A technical benefit may include providing a means for actively controlling the gear ratio, allowing for precise adjustments to propeller speed and thrust.

The control unit 15 may include a microprocessor, microcontroller, programmable digital signal processor or another programmable device. The control unit 15 may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In an example, the gear ratio is at least 10:1. A technical benefit may include providing a significant speed reduction from the power source to the propellers, optimizing propeller efficiency. In another example, the gear ratio may be between 10:1 and 20:1. A technical benefit may include balancing speed reduction with torque amplification, providing efficient propulsion for a range of vessel types and operating conditions.

In the context of the marine propulsion system described herein, the "gear ratio" (often denoted as G) is defined as the absolute value of the ratio between the rotational speed of the power source's output shaft 3 and the rotational speed of the first and second shafts 5, 7 when these two shafts rotate at equal speeds but in opposite directions. This "gear ratio" (G) is distinct from, but directly related to, the "intrinsic gear ratio" (Gr) of the field-modulated magnetic gear set. The specific relationship between G and Gr depends on the chosen configuration of the propulsion system, particularly which rotor (inner, outer, or third) is connected to the output shaft and which are connected to the propeller shafts. However, a dynamic change in the intrinsic gear ratio (Gr) will directly result in a corresponding change in the effective "gear ratio" (G) of the overall propulsion system, enabling dynamic control of propeller speeds and thrust.

In addition, the floating field-modulated magnetic gear set 8 may be configured to minimize losses associated with high-RPM input from the output shaft 3 thereby preserving the electric motor's 2 efficiency gains. A technical benefit may include maintaining high overall system efficiency by reducing energy dissipation in the magnetic gear set. The electric motor 2 may operate at a constant, high-efficiency RPM, and the floating field-modulated magnetic gear set 8 may provide variable speed control to the propellers 4, 6, decoupling motor speed from vessel speed. A technical benefit may include allowing the electric motor 2 to operate at its peak efficiency point while providing flexible propeller speed control.

In an example, the floating field-modulated magnetic gear set 8 is a radial floating field-modulated magnetic gear set 8 as seen in **FIGS. 1-4****.** A technical benefit may include a compact and efficient design for marine propulsion systems. The radial floating field-modulated magnetic gear set 8 may comprise a Halbach array to enhance magnetic field strength. A technical benefit may include increasing torque transmission capability and improving overall gear set performance.

Furthermore, the floating field-modulated magnetic gear set 8 may be designed to maintain consistent magnetic coupling despite minor misalignments between the power source 2 and propeller shafts 5, 7. A technical benefit may include improving system reliability and reducing the impact of installation imperfections.

In an example, the floating characteristic of the field-modulated magnetic gear set 8 enables the system to operate efficiently under varying load conditions by allowing slight adjustments in rotor positioning. A technical benefit may include optimizing system performance across a wide range of operating conditions.

As seen in **FIGS. 1-3****,** the first shaft 5 and the second shaft 7 are concentrically arranged. A technical benefit may include simplifying the mechanical design and reducing the overall size of the propulsion system. Also, the first shaft 5 and the second shaft 7 may be supported by bearings. A technical benefit may include ensuring smooth and stable rotation of the propellers, minimizing vibration and wear.

Furthermore, the control unit 15 may be configured to dynamically adjust the gear ratio of the floating field-modulated magnetic gear set 8 based on real-time operating conditions. A technical benefit may include enabling the propulsion system to adapt to changing environmental conditions and operational demands, optimizing efficiency and performance.

In an example, the control unit 15 may be configured to maintain the electric motor 2 within a high-efficiency RPM range while varying the gear ratio of the floating field-modulated magnetic gear set 8 to meet changing thrust demands.

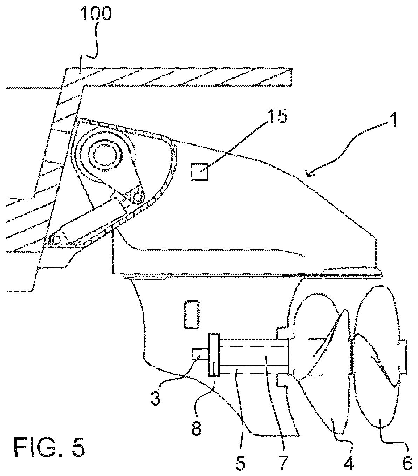

In **FIG. 5****,** the marine propulsion system 1 is arranged on a marine vessel 100. In **FIG. 5****,** the forward propeller 4 and the aft propeller 6 are configured to push the marine vessel 100 in a forward motion of the marine vessel 100. In another example, forward propeller 4 and the aft propeller 6 may be configured to pull the marine vessel in a forward motion of the marine vessel.

The present disclosure also relates to a marine vessel 100 comprising the marine propulsion system 1 as disclosed herein.

In addition to the structural aspects of the disclosed technology, the present disclosure also encompasses a method for effectively propelling a marine vessel 100. This method initiates with the generation of rotational power from a power source 2, which is then delivered via an output shaft 3. This rotational power is subsequently utilized to drive both a forward propeller 4 and an aft propeller 6, enabling the vessel's movement.

An element of this method involves the interposition of a floating field-modulated magnetic gear set 8. This gear set 8 is positioned between the output shaft 3 of the power source 2 and the respective shafts 5, 7 of the forward and aft propellers 4, 6. The purpose of this interposition is to facilitate efficient and controlled transmission of rotational power from the power source 2 to the propellers 4, 6.

The floating field-modulated magnetic gear set 8 itself comprises an inner rotor 9, an outer rotor 10, and a third rotor 11 arranged between the inner and outer rotors 9, 10. Rotational power is transmitted through this gear set, leveraging the magnetic interactions between the rotors.

To achieve this power transmission, the output shaft 3 of the power source 2 is connected to one of the rotors 9, 10, 11 within the field-modulated magnetic gear set 8. Simultaneously, the first shaft 5, connected to the forward propeller 4, and the second shaft 7, connected to the aft propeller 6, are connected to the remaining rotors 9, 10, 11 within the gear set 8. This specific arrangement ensures that the rotational power generated by the power source 2 is efficiently and effectively transferred to the propellers, driving the marine vessel forward.

Furthermore, the method may involve modulating magnetic fields between the inner rotor 9 and the outer rotor 10. This modulation is achieved through the arrangement of the third rotor 11, positioned between the inner and outer rotors 9,10 within the floating field-modulated magnetic gear set 8. By modulating these magnetic fields, precise control over the torque transmission to the forward and aft propellers 4, 6 is achieved, enabling optimized propulsion performance.

Certain aspects and variants of the disclosure are set forth in the following examples numbered consecutive below.

Example 1: A marine propulsion system (1) for a marine vessel (100), comprising a power source (2) having an output shaft (3), a forward propeller (4) having a first shaft (5), and an aft propeller (6) having a second shaft (7), the propellers (4, 6) being driven by the power source (2), the forward propeller and the aft propeller being counter-rotating, where a floating field-modulated magnetic gear set (8) is arranged between the output shaft (3) and the first and second shafts (5,7), where the field-modulated magnetic gear set (8) comprises an inner rotor (9), an outer rotor (10) and a third rotor (11) arranged between the inner and outer rotors (9,10), wherein the output shaft (3) is connected to one of the rotors (9,10,11) and the first shaft (5) and the second shaft (7) are connected to the other rotors (9,10,11).

Example 2: The marine propulsion system (1) of example 1, where the inner rotor (9) is equipped with first permanent magnets (12), the outer rotor (10) is equipped with second permanent magnets (13), and the third rotor (11) is equipped with pole pieces (14).

Example 3: The marine propulsion system (1) of example 2, wherein the first permanent magnets (12) and the second permanent magnets (13) are rare-earth magnets.

Example 4: The marine propulsion system (1) of any of the examples 1-3, where the inner rotor (9) is equipped with 2P1 permanent magnets (12), the outer rotor (10) is equipped with 2P2 permanent magnets (13), and the third rotor (11) is equipped with P3 pole pieces (14).

Example 5: The marine propulsion system (1) of example 4, wherein 2P1 and 2P2 are selected to optimize torque density for a specific operational speed of the propellers.

Example 6: The marine propulsion system (1) of example 4, wherein P3 is selected to minimize torque ripple.

Example 7: The marine propulsion system (1) of example 4, wherein the floating field-modulated magnetic gear set (8) comprises an adjustable mechanism to alter the number of active pole pieces thereby modifying the gear ratio.

Example 8: The marine propulsion system (1) of any of the examples 1-7, wherein the gear ratio is continuously variable to allow for seamless adjustment of propeller speed independent of power source RPM.

Example 9: The marine propulsion system (1) of any of the examples 1-8, where the third rotor (11) is configured to modulate the magnetic fields between the inner and outer rotors (9, 10).

Example 10: The marine propulsion system (1) of any of the examples 4-9, where an intrinsic gear ratio Gr is defined by Gr=P3/P1, wherein P3=P1+P2.

Example 11: The marine propulsion system (1) of example 10, wherein the intrinsic gear ratio Gr is dynamically adjustable.

Example 12: The marine propulsion system (1) of any of the examples 1-11, comprising a control unit (15).

Example 13: The marine propulsion system (1) of example 12, wherein the control unit (15) is configured to adjust the position of the third rotor (11) to vary the gear ratio.

Example 14: The marine propulsion system (1) of any of the examples 1-13, where the gear ratio is at least 10:1.

Example 15: The marine propulsion system (1) of example 14, wherein the gear ratio is between 10:1 and 20:1.

Example 16: The marine propulsion system (1) of any of the examples 1-15, where the output shaft (3) is connected with the inner rotor (9), the first shaft (5) is connected with the outer rotor (10) and the second shaft (7) is connected with the third rotor (11).

Example 17: The marine propulsion system (1) of any of the examples 1-15, where the output shaft (3) is connected with the third rotor (11), the first shaft (5) is connected with the outer rotor (10) and the second shaft (7) is connected with the inner rotor (9).

Example 18: The marine propulsion system (1) of any of the examples 1-15, where the output shaft (3) is connected with the outer rotor (10), the first shaft (5) is connected with the third rotor (11) and the second shaft (7) is connected with the inner rotor (9).

Example 19: The marine propulsion system (1) of any of the examples 2-18, wherein the pole pieces (14) on the third rotor (11) are skewed to reduce cogging torque.

Example 20: The marine propulsion system (1) of any of the examples 1-19, wherein the third rotor (11) comprises a high-temperature superconductor material to enhance magnetic field modulation.

Example 21: The marine propulsion system (1) of any of the examples 1-20, where the first shaft (5) and the second shaft (7) are concentrically arranged.

Example 22: The marine propulsion system (1) of any of the examples 1-21, wherein the first shaft (5) and the second shaft (7) are supported by bearings.

Example 23: The marine propulsion system (1) of any of examples 1-22, wherein the counter-rotation is controlled to optimize thrust at varying vessel speeds.

Example 24: The marine propulsion system (1) of any of the examples 1-23, wherein the outer rotor (10) and the third rotor (11) rotate in opposite directions.

Example 25: The marine propulsion system (1) of any of the examples 1-24, wherein the power source (2) is an electric motor (2).

Example 26: The marine propulsion system (1) of example 25, wherein the electric motor (2) is a permanent magnet synchronous motor (PMSM).

Example 27: The marine propulsion system (1) of example 25, wherein the electric motor (2) is optimized for high-RPM operation, exceeding 5000 RPM.

Example 28: The marine propulsion system (1) of any of the examples 25-27, wherein the floating field-modulated magnetic gear set (8) is configured to minimize losses associated with high-RPM input, thereby preserving the electric motor's (2) efficiency gains.

Example 29: The marine propulsion system (1) of any of the examples 25-28, wherein the electric motor (2) operates at a constant, high-efficiency RPM, and the floating field-modulated magnetic gear set (8) provides variable speed control to the propellers (4, 6), decoupling motor speed from vessel speed.

Example 30: The marine propulsion system (1) of any of the examples 1-29, wherein the floating field-modulated magnetic gear set (8) is a radial floating field-modulated magnetic gear set (8).

Example 31: The marine propulsion system (1) of example 30, wherein the radial floating field-modulated magnetic gear set (8) includes a Halbach array to enhance magnetic field strength.

Example 32: The marine propulsion system (1) of any of the examples 1-31, wherein the floating field-modulated magnetic gear set (8) is configured to allow axial displacement of the inner rotor (9) relative to the outer rotor (10) to accommodate thermal expansion and contraction.

Example 33: The marine propulsion system (1) of any of the examples 1-32, wherein the floating field-modulated magnetic gear set (8) is designed to maintain consistent magnetic coupling despite minor misalignments between the power source (2) and propeller shafts (5, 7).

Example 34: The marine propulsion system (1) of any of the examples 1-33, wherein the floating characteristic of the field-modulated magnetic gear set (8) enables the system to operate efficiently under varying load conditions by allowing slight adjustments in rotor positioning.

Example 35: The marine propulsion system (1) of example 12, wherein the control unit (15) is configured to dynamically adjust the gear ratio of the floating field-modulated magnetic gear set (8) based on real-time operating conditions.

Example 36: A marine vessel (100) comprising a marine propulsion system (1) of any of the examples 1-35.

Example 37: A method for propelling a marine vessel (100), comprising: generating rotational power from a power source (2) via an output shaft (3); driving a forward propeller (4) and an aft propeller (6) using the rotational power; interposing a floating field-modulated magnetic gear set (8) between the output shaft (3) of the power source (2) and a first shaft (5) of the forward propeller (4) and a second shaft (7) of the aft propeller (6); transmitting rotational power through the field-modulated magnetic gear set (8) comprising an inner rotor (9), an outer rotor (10), and a third rotor (11) arranged between the inner and outer rotors (9, 10); connecting the output shaft (3) to one of the rotors (9, 10, 11) of the field-modulated magnetic gear set (8); and connecting the first shaft (5) and the second shaft (7) to the other rotors (9, 10, 11) of the field-modulated magnetic gear set (8) to drive the forward propeller (4) and the aft propeller (6), respectively.

Example 38: The method of example 37, further comprising modulating magnetic fields between the inner rotor (9) and the outer rotor (10) using a third rotor (11) positioned between the inner and outer rotors (9, 10) within the floating field-modulated magnetic gear set (8), thereby controlling torque transmission to the forward propeller and the aft propeller.

Example 39: A method for dynamically controlling the propulsion of a marine vessel, comprising:
- generating rotational power from a power source via an output shaft;
- driving a forward propeller (4) and an aft propeller (6) using the rotational power;
- interposing a floating field-modulated magnetic gear set between the output shaft (3) of the power source (2) and a first shaft (5) of the forward propeller (4) and a second shaft (7) of the aft propeller (6);
- sensing at least one operational parameter of the marine vessel or its environment;
- dynamically adjusting the gear ratio of the floating field-modulated magnetic gear set based on the sensed operational parameter; and
- controlling the speed of the forward propeller (4) and/or the aft propeller (6) in response to the adjusted gear ratio to optimize propulsion efficiency or vessel maneuverability.

Example 40: A method for dynamically controlling the propulsion of a marine vessel, comprising:
- generating rotational power from a power source via an output shaft;
- driving a forward propeller and an aft propeller using the rotational power;
- interposing a floating field-modulated magnetic gear set between the output shaft of the power source and a first shaft of the forward propeller and a second shaft of the aft propeller;

- transmitting rotational power through the field-modulated magnetic gear set comprising an inner rotor, an outer rotor, and a third rotor arranged between the inner and outer rotors;
- connecting the output shaft to one of the rotors of the field-modulated magnetic gear set;
- connecting the first shaft and the second shaft to the other rotors of the field-modulated magnetic gear set to drive the forward propeller and the aft propeller, respectively; and - dynamically adjusting the gear ratio of the floating field-modulated magnetic gear set to optimize propulsion efficiency or vessel maneuverability

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A marine propulsion system (1) for a marine vessel (100), comprising
a power source (2) having an output shaft (3),
a forward propeller (4) having a first shaft (5), and an aft propeller (6) having a second shaft (7), the propellers (4, 6) being driven by the power source (2), the forward propeller and the aft propeller being counter-rotating,
where a floating field-modulated magnetic gear set (8) is arranged between the output shaft (3) and the first and second shafts (5,7),
where the field-modulated magnetic gear set (8) comprises an inner rotor (9), an outer rotor (10) and a third rotor (11) arranged between the inner and outer rotors (9,10),
wherein the output shaft (3) is connected to one of the rotors (9,10,11) and the first shaft (5) and the second shaft (7) are connected to the other rotors (9,10,11).

2. The marine propulsion system (1) of claim 1, where the third rotor (11) is configured to modulate the magnetic fields between the inner and outer rotors (9, 10).

3. The marine propulsion system (1) of claim 1 and/or 2, where the inner rotor (9) is equipped with first permanent magnets (12), the outer rotor (10) is equipped with second permanent magnets (13), and the third rotor (11) is equipped with pole pieces (14).

4. The marine propulsion system (1) of any of the claims 1-3, where the inner rotor (9) is equipped with 2P1 permanent magnets (12), the outer rotor (10) is equipped with 2P2 permanent magnets (13), and the third rotor (11) is equipped with P3 pole pieces (14).

5. The marine propulsion system (1) of claim 4, where an intrinsic gear ratio Gr is defined by Gr=P3/P1, wherein P3=P1+P2.

6. The marine propulsion system (1) of claim 5, wherein the intrinsic gear ratio Gr is dynamically adjustable.

7. The marine propulsion system (1) of any of the claims 1-6, comprising a control unit (15).

8. The marine propulsion system (1) of claim 7, wherein the control unit (15) is configured to adjust the position of the third rotor (11) to vary the gear ratio.

9. The marine propulsion system (1) of any of the claims 1-8, where the gear ratio is at least 10:1.

10. The marine propulsion system (1) of any of the claims 1-9, where the output shaft (3) is connected with the inner rotor (9), the first shaft (5) is connected with the outer rotor (10) and the second shaft (7) is connected with the third rotor (11).

11. The marine propulsion system (1) of any of the claims 1-9, where the output shaft (3) is connected with the third rotor (11), the first shaft (5) is connected with the outer rotor (10) and the second shaft (7) is connected with the inner rotor (9).

12. The marine propulsion system (1) of any of the claims 1-9, where the output shaft (3) is connected with the outer rotor (10), the first shaft (5) is connected with the third rotor (11) and the second shaft (7) is connected with the inner rotor (9).

13. A marine vessel (100) comprising a marine propulsion system (1) of any of the claims 1-12.

14. A method for propelling a marine vessel (100), comprising:
- generating rotational power from a power source (2) via an output shaft (3);
- driving a forward propeller (4) and an aft propeller (6) using the rotational power;
- interposing a floating field-modulated magnetic gear set (8) between the output shaft (3) of the power source (2) and a first shaft (5) of the forward propeller (4) and a second shaft (7) of the aft propeller (6);
- transmitting rotational power through the field-modulated magnetic gear set (8) comprising an inner rotor (9), an outer rotor (10), and a third rotor (11) arranged between the inner and outer rotors (9, 10);
- connecting the output shaft (3) to one of the rotors (9, 10, 11) of the field-modulated magnetic gear set (8); and
- connecting the first shaft (5) and the second shaft (7) to the other rotors (9, 10, 11) of the field-modulated magnetic gear set (8) to drive the forward propeller (4) and the aft propeller (6), respectively.

15. A method for dynamically controlling the propulsion of a marine vessel, comprising:
- generating rotational power from a power source via an output shaft;
- driving a forward propeller and an aft propeller using the rotational power;
- interposing a floating field-modulated magnetic gear set between the output shaft of the power source and a first shaft of the forward propeller and a second shaft of the aft propeller;
- transmitting rotational power through the field-modulated magnetic gear set comprising an inner rotor, an outer rotor, and a third rotor arranged between the inner and outer rotors;
- connecting the output shaft to one of the rotors of the field-modulated magnetic gear set;
- connecting the first shaft and the second shaft to the other rotors of the field-modulated magnetic gear set to drive the forward propeller and the aft propeller, respectively; and
- dynamically adjusting the gear ratio of the floating field-modulated magnetic gear set to optimize propulsion efficiency or vessel maneuverability

## Amended claims

### Amended claims in accordance with Rule 137(2) EPC.

1. A marine propulsion system (1) for a marine vessel (100), comprising a power source (2) having an output shaft (3),
a forward propeller (4) having a first shaft (5), and an aft propeller (6) having a second shaft (7), the propellers (4, 6) being driven by the power source (2), the forward propeller and the aft propeller being counter-rotating,
where a floating field-modulated magnetic gear set (8) is arranged between the output shaft (3) and the first and second shafts (5,7),
where the field-modulated magnetic gear set (8) comprises an inner rotor (9), an outer rotor (10) and a third rotor (11) arranged between the inner and outer rotors (9,10),
wherein the output shaft (3) is connected to one of the rotors (9,10,11) and the first shaft (5) and the second shaft (7) are connected to the other rotors (9,10,11),
where the gear ratio is at least 10:1.

2. The marine propulsion system (1) of claim 1, where the third rotor (11) is configured to modulate the magnetic fields between the inner and outer rotors (9, 10).

3. The marine propulsion system (1) of claim 1 and/or 2, where the inner rotor (9) is equipped with first permanent magnets (12), the outer rotor (10) is equipped with second permanent magnets (13), and the third rotor (11) is equipped with pole pieces (14).

4. The marine propulsion system (1) of any of the claims 1-3, where the inner rotor (9) is equipped with 2P1 permanent magnets (12), the outer rotor (10) is equipped with 2P2 permanent magnets (13), and the third rotor (11) is equipped with P3 pole pieces (14).

5. The marine propulsion system (1) of claim 4, where an intrinsic gear ratio Gr is defined by Gr=P3/P1, wherein P3=P1+P2.

6. The marine propulsion system (1) of claim 5, wherein the intrinsic gear ratio Gr is dynamically adjustable.

7. The marine propulsion system (1) of any of the claims 1-6, comprising a control unit (15).

8. The marine propulsion system (1) of claim 7, wherein the control unit (15) is configured to adjust the position of the third rotor (11) to vary the gear ratio.

9. The marine propulsion system (1) of any of the claims 1-8, where the output shaft (3) is connected with the inner rotor (9), the first shaft (5) is connected with the outer rotor (10) and the second shaft (7) is connected with the third rotor (11).

10. The marine propulsion system (1) of any of the claims 1-8, where the output shaft (3) is connected with the third rotor (11), the first shaft (5) is connected with the outer rotor (10) and the second shaft (7) is connected with the inner rotor (9).

11. The marine propulsion system (1) of any of the claims 1-8, where the output shaft (3) is connected with the outer rotor (10), the first shaft (5) is connected with the third rotor (11) and the second shaft (7) is connected with the inner rotor (9).

12. A marine vessel (100) comprising a marine propulsion system (1) of any of the claims 1-11.

13. A method for propelling a marine vessel (100) by the marine propulsion system (1) of any of the claims 1-11, comprising:
- generating rotational power from a power source (2) via an output shaft (3);
- driving a forward propeller (4) and an aft propeller (6) using the rotational power;
- interposing a floating field-modulated magnetic gear set (8) between the output shaft (3) of the power source (2) and a first shaft (5) of the forward propeller (4) and a second shaft (7) of the aft propeller (6);
- transmitting rotational power through the field-modulated magnetic gear set (8) comprising an inner rotor (9), an outer rotor (10), and a third rotor (11) arranged between the inner and outer rotors (9, 10);
- connecting the output shaft (3) to one of the rotors (9, 10, 11) of the field-modulated magnetic gear set (8); and
- connecting the first shaft (5) and the second shaft (7) to the other rotors (9, 10, 11) of the field-modulated magnetic gear set (8) to drive the forward propeller (4) and the aft propeller (6), respectively.

14. A method for dynamically controlling the propulsion of a marine vessel by the marine propulsion system (1) of any of the claims 1-11, comprising:
- generating rotational power from a power source via an output shaft;
- driving a forward propeller and an aft propeller using the rotational power;
- interposing a floating field-modulated magnetic gear set between the output shaft of the power source and a first shaft of the forward propeller and a second shaft of the aft propeller;
- transmitting rotational power through the field-modulated magnetic gear set comprising an inner rotor, an outer rotor, and a third rotor arranged between the inner and outer rotors;
- connecting the output shaft to one of the rotors of the field-modulated magnetic gear set;
- connecting the first shaft and the second shaft to the other rotors of the field-modulated magnetic gear set to drive the forward propeller and the aft propeller, respectively; and
- dynamically adjusting the gear ratio of the floating field-modulated magnetic gear set to optimize propulsion efficiency or vessel maneuverability
